# EUROPEAN PATENT APPLICATION

(11) **EP 1 627 807 A1**
(43) Date of publication of application: **22.02.2006**
(21) Application number: 05076902.5
(22) Date of filing: 16.08.2005
(51) Int. Cl.: B62J 21/00

(54) **Dress guard**

(30) Priority: 19.08.2004 NL 1026877
(71) Applicant: De Woerd B.V., NL-3771 VG Barneveld (NL)
(72) Inventor: Verbrugge, Jeroen Klaasjan, 3151 VJ Hoek van Holland (NL)
(74) Representative: Brookhuis, Hendrik Jan Arnold

(57) **Abstract**

The invention relates to a dress guard for fastening to a mudguard (8) of a bicycle or the like. The dress guard comprises at least one dress guard part (1). At least one of the dress guard parts (1) contains at least one plastic sheet part (2) for shielding a part of a wheel of the bicycle or the like, which sheet part (2) is manufactured by means of injection moulding, and comprises at least one other part (4,5,6,7,9) made of a material with different properties from those of the sheet part (2), which other part (4,5,6,7,9) is permanently connected to the sheet part. The at least one sheet part (2) and the at least one other part (4,5,6,7,9) are manufactured in a single multi-component injection mould, in such a way that a permanent connection is obtained.

## Description

The present invention relates to a dress guard for fastening to a mudguard of a bicycle or the like. The dress guard comprises at least one dress guard part, at least one of the dress guard parts containing at least one plastic sheet part for shielding a part of a wheel of the bicycle or the like, which sheet part is manufactured by means of injection moulding, and comprises at least one other part made of a material with different properties from those of the sheet part. The other part is permanently connected to the sheet part.

Such a dress guard part is known, for example from NL 9301975. In this case retaining means, inter alia, are connected to the sheet part, in order to connect the dress guard part permanently to the mudguard and to the rear fork.

The object of the present invention is to provide an improved dress guard of the abovementioned type.

This object is achieved with a dress guard part according to the invention, which is characterized in that the at least one sheet part and the at least one other part are manufactured in a single multi-component injection mould, in such a way that the permanent connection is obtained. A permanent connection is easily and rapidly produced by this production method, it being possible to obtain connections between parts of materials with different desired properties.

Dress guard parts obtained according to the invention are efficient to produce, which means that a cost advantage can be obtained. Furthermore, dress guard parts according to the invention can be fitted easily and quickly, partly because, for example, there are as few loose parts as possible. Moreover, in the case of this production method little or no finishing work is necessary. Dress guard parts suitable for all sizes of mudguards can be made, as can dress guard parts for all mudguard materials, such as metal, plastic etc.

For example, the other part is made of a material with different mechanical or physical properties. The other part can therefore be more rigid, harder, and/or sturdier than the sheet part. The other part can also be more flexible, softer, and/or more elastic. For example, the other part is made of an elastomer. It is also possible, in combination with the other mechanical and physical properties or otherwise, to make the other part in a different colour. The other material from which the other part will be made will depend partly on the function of the other part, a subject which will be reverted to below.

The sheet part is advantageously made of a rigid material, so that good shielding of the part of the wheel is achieved. The sheet part may be transparent if desired, so that the wheel remains visible. In a possible embodiment the sheet part is of a convex shape.

The other part of the dress guard part can comprise a combination of one or more of the following components: contact parts, reinforcing elements and connecting elements. These components will be explained below.

In a possible embodiment of the dress guard according to the invention the other part comprises one or more contact parts, which ultimately rest against parts of the bicycle or the like. For example, these contact parts are in contact with a mudguard, a rear fork, a lock or another part of the frame of the bicycle.

The contact parts are advantageously made of a flexible, soft material, in such a way that damage to the bicycle or the like is prevented.

In a possible embodiment the contact part forms a contact edge along at least a part of the periphery of the sheet part, in such a way that after fixing of the dress guard to the bicycle or the like said contact edge rests in a sealing manner against the mudguard. Dirt can consequently be prevented from accumulating between the mudguard and the dress guard part.

In another possible embodiment of the dress guard according to the invention the other part comprises one or more reinforcing elements. The reinforcing element is preferably made of a rigid material. This means that the sheet part, which because of the low thickness is often a flexible unit, can acquire additional rigidity.

For example, the reinforcing element forms a peripheral edge along at least a part of the periphery of the sheet part. A peripheral edge may be provided along the entire sheet part, or only on parts of the edge which do not ultimately rest against a mudguard.

In addition, the reinforcing elements may be one or more ribs provided in the sheet part, near the peripheral edge of the sheet part or otherwise. This can be advantageous in particular if the reinforcing elements are of a material which is such that it can cause damage to parts of the bicycle should they come into contact with it. By providing ribs in the sheet part it is ensured that the reinforcing elements will not come into contact with parts of the bicycle.

In yet another possible embodiment of the dress guard according to the invention the other part comprises one or more connecting elements. As already mentioned, it is possible for the dress guard part according to the invention to comprise a combination of connecting elements, contact parts and reinforcing elements.

It is advantageous for the part of the connecting element which ultimately rests against the bicycle or the like to be made of a flexible and soft material. Damage to the bicycle or the like can be prevented in this way. The friction between the connecting element and the bicycle or the like is also increased, so that the dress guard part is prevented from shifting relative to, for example, the mudguard or the rear fork. Furthermore, this will ensure that the connection between the dress guard part and the mudguard is rattle-free.

More advantageously, a side of the connecting element which does not touch the bicycle or the like is made of a rigid plastic. Sturdiness and clamping force of the connecting element can be obtained in this way.

For example, the connecting elements connect the dress guard part to a mudguard of a bicycle or the like, or to a rear fork of a bicycle or the like, or to another dress guard part. A number of examples of connecting elements are explained below.

First, it is possible by means of the connecting element to fasten the dress guard part to a rear fork of a bicycle or the like. In one embodiment the connecting element is a clamp which can be brought into engagement with the rear fork.

The connecting element is preferably a substantially U-shaped clamp in which the legs of the U extend substantially perpendicularly to the sheet part for the purpose of fastening the dress guard part to the rear fork. The legs of the U-shaped clamp are preferably made of a rigid material, so that said legs can grip around the rear fork, and the inside of the U shape is preferably made of a flexible material, so that damage to the rear fork can be prevented.

Secondly, it is possible by means of the connecting element to fasten the dress guard part to the mudguard of a bicycle or the like. In one embodiment the connecting element is a spring lip situated on at least a part of the periphery of the sheet part, which spring lip can spring laterally relative to the sheet part. This spring lip can be brought against an edge of the mudguard. This lip advantageously clamps against the inside of the mudguard, owing to the fact that a part of said lip is made of a rigid material which has the tendency to spring back into its initial position. If the part of the lip which rests against the mudguard is made of a flexible, rubber-like material, the friction between the lip and the mudguard will become so great that the dress guard part is prevented from shifting relative to the mudguard.

It is also possible for the spring lip to have a hook part which can grip behind an edge of a mudguard. An even more reliable fastening can be obtained in this way.

In another possible embodiment the dress guard part can be fastened to the mudguard by the fact that the connecting element is a slot-shaped opening which is situated on at least a part of the periphery of the sheet part and with which an edge of a mudguard can be brought into engagement. A very sturdy connection can be obtained in this way.

Yet another possibility is to connect two dress guard parts to each other by way of a connecting assembly extending along the top of the mudguard. At least one part of the connecting assembly is permanently connected to a dress guard part in the manner described here. For example, a part of the connecting assembly is a strip which is connectable to a second part of the connecting assembly on a second dress guard part on the other side of the mudguard. This second part of the connecting assembly can be an opening in which the strip can be accommodated, such as is known, for example from NL 9402127.

The connecting element with which the dress guard part is connected to the mudguard can be an element which extends only along a small part of the periphery of the top part of the sheet part, such as a spring lip which can be moved with one finger, or a strip measuring 0.5 - 1.5 cm. It is further possible for the connecting element to be of a length which is equal or virtually equal to the length of the entire top part of the periphery of the sheet part. For example, a slot-shaped opening can advantageously be provided on the entire peripheral edge of the top part of the sheet part, in order to produce a very sturdy connection.

Thirdly, it is possible by means of the connecting element to bring the dress guard part into engagement with a second dress guard part. In one embodiment the connecting element is a hinge element which is fitted on the sheet part. With such a hinge element it is possible to fit two dress guard parts on either side of a lock of the bicycle or the like.

The hinge element also preferably comprises a connecting element which can be brought into engagement with a rear fork of a bicycle or the like. In this way the hinge element can fulfil two functions simultaneously: connection to a part of the bicycle and to a second dress guard part.

In another possible embodiment for bringing the dress guard part into engagement with a second dress guard part the one connecting element is an opening in the sheet part surrounded by an edge made of a material with different properties. Another connecting element can be brought into engagement with said opening, for example a connecting element comprising a projection on the sheet part. The projection on the sheet part advantageously comprises two spring lips with a hook, such that said lips can engage in an opening.

The embodiments of a dress guard part described above can advantageously be manufactured by means of a two-component injection moulding method. By means of this method a permanent connection is obtained in a single multi-component injection mould.

The invention also relates to a method for manufacturing a dress guard part for a dress guard, which dress guard part comprises at least one plastic sheet part for shielding a part of a wheel of the bicycle or the like, which sheet part is manufactured by means of injection moulding. The dress guard part also comprises at least one other part made of a material with different properties from those of the sheet part, which other part is permanently connected to the sheet part. In the case of the method according to the invention the at least one sheet part and the at least one other part from a material with different properties are injection moulded in succession in a single multi-component injection mould. The mould first contains a cavity for a sheet part, into which cavity the material for the sheet part can be injected. A part of the mould subsequently moves, so that a new cavity is produced for the other part. The material for the other part can be injected into this cavity. Owing to the fact that the material of the sheet part has not yet fully hardened, the material for the other part combines with the material of the sheet part, so that the permanent connection between the two materials is produced.

The invention will be explained in greater detail below with reference to the drawing, in which:
Fig. 1 shows a first embodiment of a dress guard part according to the invention with a number of connecting elements,
Fig. 2 shows a second embodiment of a dress guard part according to the invention with a number of connecting elements and a contact part,
Figs. 3a and 3b show a part of a dress guard part according to the invention with a connecting element and a reinforcing element,
Fig. 4 shows a third embodiment of a dress guard part according to the invention with a number of connecting elements, a contact part and a number of reinforcing elements,
Fig. 5 shows a detail of the dress guard part shown in Fig. 4,
Fig. 6 shows a second detail of the dress guard part shown in Fig. 4,
Fig. 7 shows a fourth embodiment of a dress guard part according to the invention with a number of connecting elements,
Fig. 8 shows a connecting element of a fifth embodiment of a dress guard part according to the invention,
Fig. 9 shows a sixth embodiment of a dress guard part according to the invention,
Fig. 10 shows a seventh embodiment of a dress guard part according to the invention.

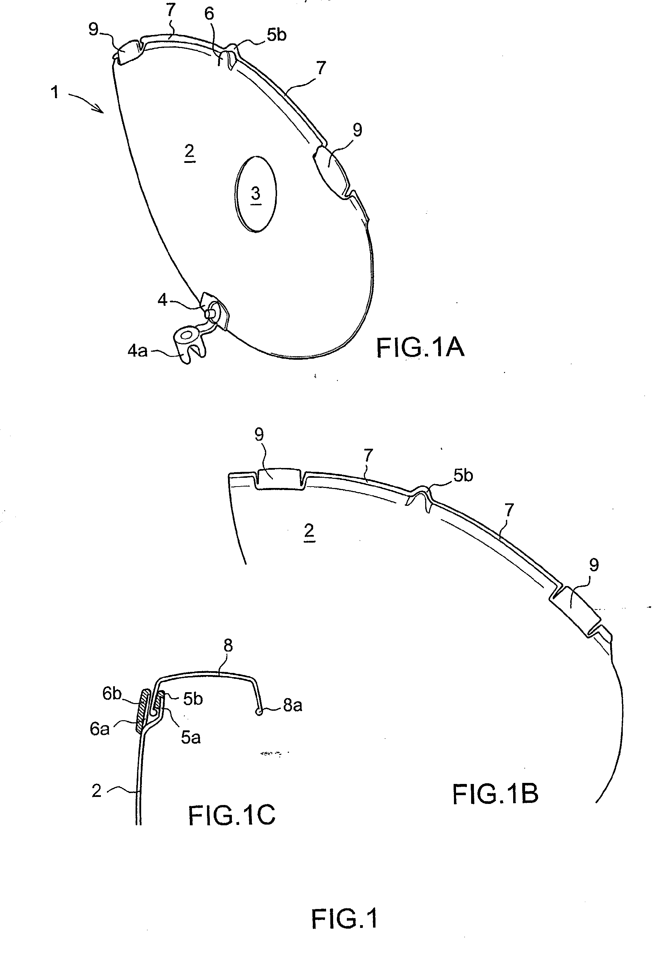

Fig. 1 shows a dress guard for fastening to a mudguard of a bicycle or the like according to the invention, comprising a dress guard part 1. The dress guard part 1 contains a plastic sheet part 2 for shielding a part of a wheel of the bicycle or the like, which sheet part has been manufactured by injection moulding. An opening 3 is provided in the sheet part 2, in order to permit the fitting of a lock on the bicycle or the like. The dress guard part 1 also comprises a connecting element 4 made of a material with different properties from those of the sheet part 2. According to the invention, this connecting element 4 is manufactured in one piece in a single multi-component injection mould, together with the sheet part 2, in such a way that a permanent connection between the connecting element 4 and the sheet part 2 is obtained. The sheet part 2 is made of a rigid, transparent material. The connecting element 4 is made of a more flexible, rubber-like material. The connecting element 4 comprises a substantially U-shaped clamp 4a which can be brought into engagement with a rear fork of a bicycle or the like. The dress guard part further comprises a number of connecting elements 5, 6, 7 and 9 for fastening the dress guard part to a mudguard 8 with a thickened bottom edge 8a. Connecting element 7 is a spring lip situated on a part of the periphery of the sheet part 2, which lip can spring laterally relative to the sheet part 2. As a result, said lip can grip behind the thickened bottom edge 8a of the mudguard 8. The end of the spring lip 7 is made of a flexible, rubber-like material. This means that damage to the bicycle or the like can be prevented. In addition, the friction between the connecting element and the bicycle or the like is increased, so that the dress guard part 2 is prevented from shifting relative to the mudguard 8. Furthermore, this means that the connection between the dress guard part and the mudguard will be rattle-free. The connecting elements 9 rest against the outside of the mudguard 8 after fastening. These connecting elements 9 are also made of a flexible, rubber-like material. The connecting element 6 is a spring lip which has a part 6a made of the same material as that of the sheet part 2, on top of which a layer of other material 6b is placed, in order to give an attractive appearance to the outside of the dress guard. The spring lip 5 can be placed against the rear side of the mudguard 8. The hook part 5a is made of a rigid plastic, so that sufficient gripping force is obtained. A hook part 5b is made of a flexible material, so that the spring lip 5 can grip behind the thickened bottom edge 8a of the mudguard 8. The connecting elements 4, 5b, 6b, 7 and 9 are made of the same material in this embodiment.

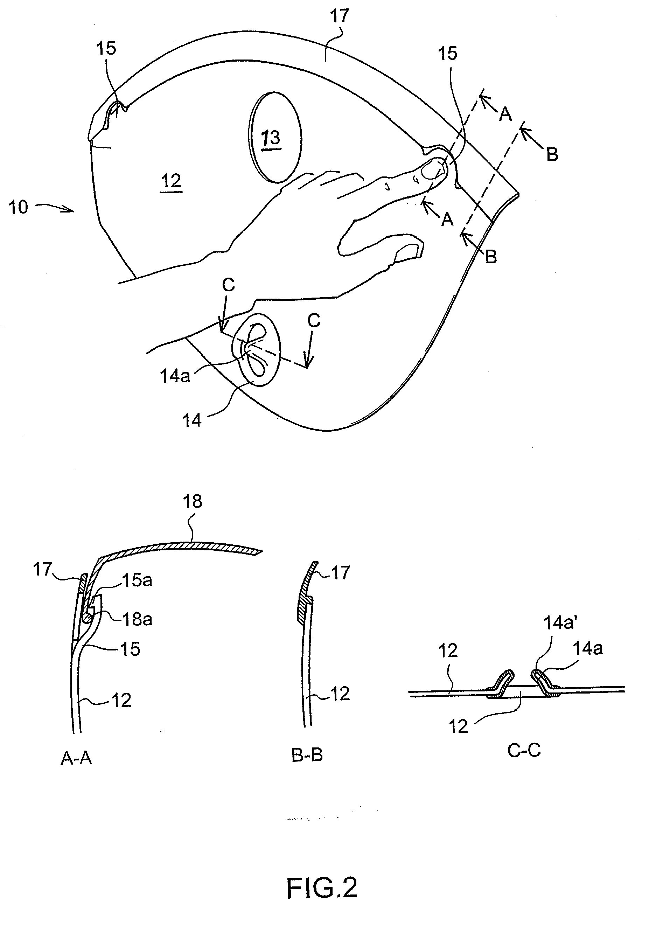

Fig. 2 shows a second embodiment of a dress guard part 10 according to the invention. The dress guard part 10 comprises a sheet part 12 with an opening 13 for a lock of the bicycle. The dress guard part 10 also comprises a connecting element 14 for connection of the dress guard part 10 to a rear fork of a bicycle or the like. The connecting element 14 comprises a U-shaped clamp, in which the legs 14a of the U extend substantially perpendicularly to the sheet part. The parts of this connecting element 14 which ultimately rest against the rear fork of the bicycle, 14a', are made of a flexible material so that damage to the fork is prevented. The dress guard part 10 also comprises two spring lips 15 made of the same rigid material as the sheet part 12, which lips can grip behind an edge of a mudguard 18. The spring lip 15 has a hook part 15a, so that the spring lip can grip behind a thickened bottom edge 18a of the mudguard 18. The dress guard part 10 also comprises a contact edge 17 along a part of the periphery of the sheet part, so that after fastening said contact edge rests in a sealing manner against the mudguard. Said contact edge 17 is made of a flexible material, so that damage to the mudguard 18 is prevented.

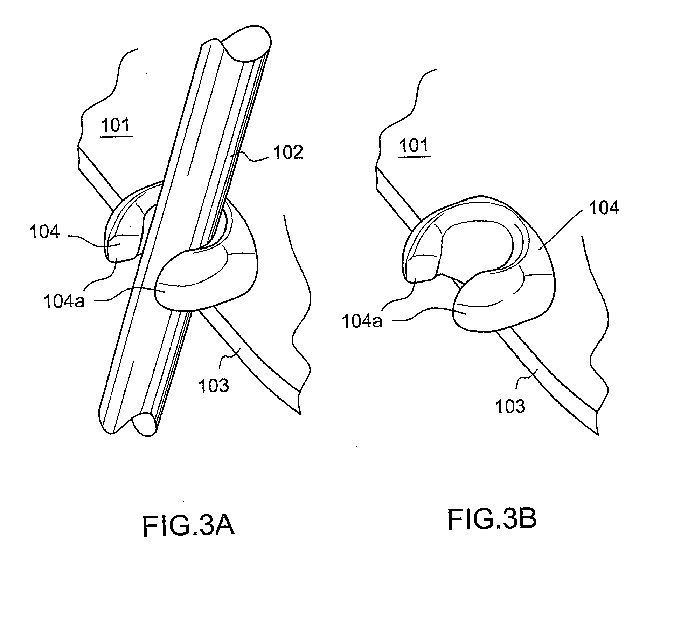

Figs. 3a and 3b show a part of a dress guard part according to the invention. Parts of the dress guard part shown are a sheet part 101, a reinforcing element 103 and a connecting element 104. The reinforcing element 103 is shown here in the form of a peripheral edge along the illustrated part of the periphery of the sheet part 101. The reinforcing element 103 is made of a rigid material, in order to give the sheet part 101 a desired rigidity. The connecting element 104 is very similar to the connecting element 14 shown in Fig. 2. The connecting element 104 is a U-shaped clamp in which the legs 104a of the U extend substantially perpendicularly to the sheet part 101. As shown in Fig. 3a, said legs 14a of the U can grip around a rear fork 102 of a bicycle or the like.

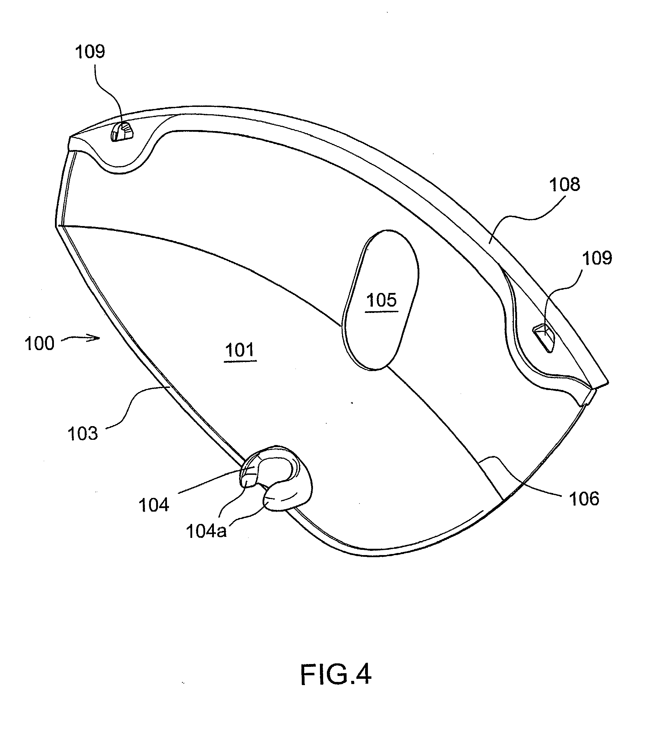

Fig. 4 shows a dress guard part 100 according to the invention. The dress guard part 100 comprises a sheet part 101 and a connecting element 104 with U-shaped legs 104a as shown in Fig. 3. The dress guard part 100 also comprises reinforcing elements 103 (as shown in Fig. 3) and 106. Reinforcing element 106 is a rib which is provided in the sheet part 101. The sheet part 101 contains an opening 105 for a lock or the like of the bicycle. A contact edge 108 and connecting elements 109 are situated along the top side of the periphery of the sheet part 101.

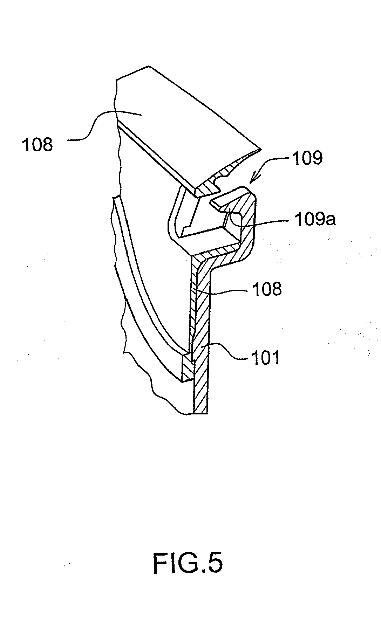

The connecting element 109 is shown in detail (without the presence of a mudguard) in Fig. 5. It can be seen that the connecting element 109 is made of two materials: a part of the connecting element 109 that ultimately rests against the bicycle or the like is made of a more flexible material, which is the same as that of which the contact edge 108 is made, while another part of the connecting element 109 which does not come into contact with the bicycle or the like is made of a rigid plastic, the same material as that of which the sheet part 101 is made. The connecting element 109 has a hook part 109a, so that the connecting element 109 can grip behind an edge of a mudguard.

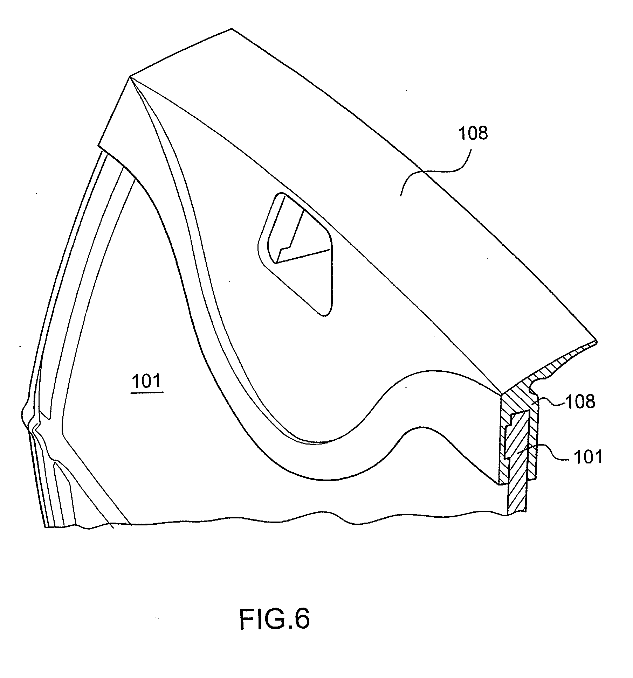

The contact edge 108 is shown in cross section in Fig. 6, from which it can be seen that the contact edge 108 is made of a different material from that of the sheet part 101. The contact edge 108 is made of a flexible material, so that the mudguard is not damaged and the dress guard part ultimately rests in a sealing manner against the mudguard.

It can be seen from Figs. 4, 5 and 6 that on the top side of the periphery of the sheet part 101 clamping parts made of the same material have been made in one piece with the sheet part 101, and that in a second injection moulding step parts such as the contact edge 108 and the parts of the connecting elements 109 resting against the mudguard, which are made of a different material, are permanently connected to said sheet part.

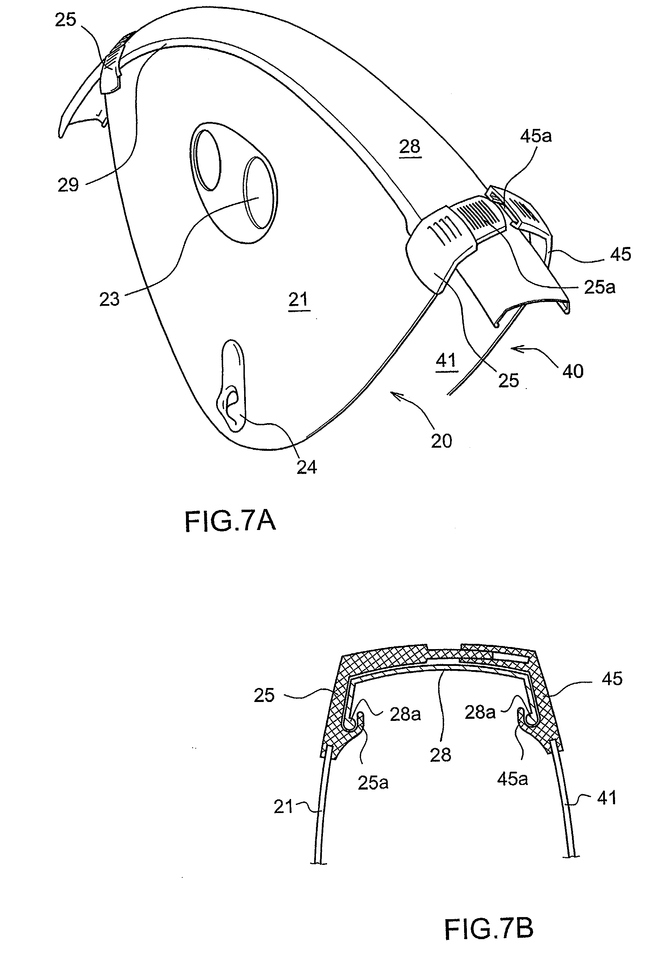

Figs. 7a and 7b show a fourth embodiment of a dress guard part 20 and a dress guard part 40. The dress guard part 20 comprises a sheet part 21 with an opening 23 for a lock of the bicycle and a connecting element 24 for fastening the dress guard part 20 to a rear fork. In this example a gap 29 is present between the sheet part 21 and a mudguard 28. The mudguard 28 comprises a thickened bottom edge 28a. The sheet part 21 is integral with an element 25 which is a component of a connecting assembly, for fastening around the mudguard 28 to the dress guard part 40 on the other side of the mudguard 28. The second dress guard part 40 comprises a sheet part 41 and an element 45 which is a second component of the connecting assembly. The elements 25 and 45 are of a relatively soft material here compared with the sheet part. They both have a hook part, 25a and 45a respectively, which hook parts grip around the thickened bottom edge 28a of the mudguard 28 on the underside. The elements 25 and 45 can be fastened to each other on top of the mudguard 28, for example by the fact that a toothed lip 25a of the element 25 can be inserted into a corresponding opening 45a of the element 45.

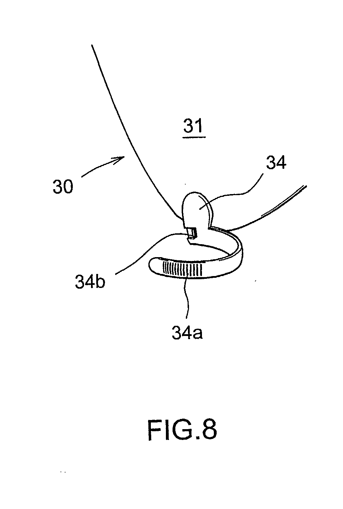

Fig. 8 shows a connecting element 34 of a fifth embodiment of a dress guard part 30 according to the invention. The dress guard part 30 comprises a sheet part 31 to which the connecting element 34 with a toothed strip 34a is permanently connected. Said strip 34a can be fitted around a rear fork and fastened in an opening 34b of the connecting element 34.

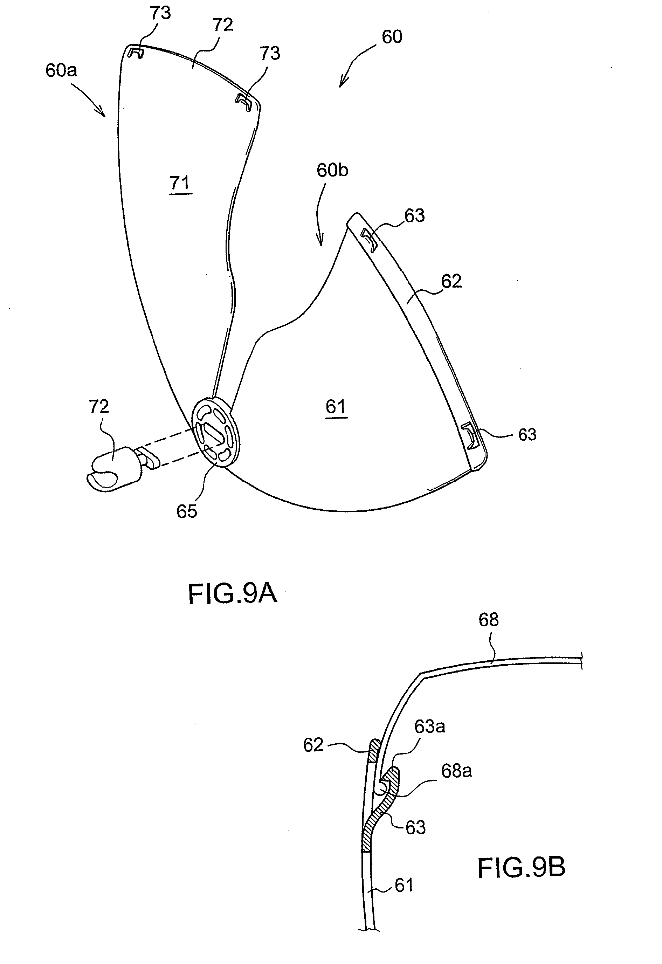

Figs. 9 a and 9b show a sixth embodiment of a dress guard 60 according to the invention. The dress guard 60 comprises two dress guard parts 60a and 60b, each with a sheet part, 71 and 61 respectively. The dress guard parts have a contact edge 72 and 62 and connecting elements 73 and 63. In the cross section shown in Fig. 9b it can be seen that the contact edge 62 has an end which is made of a different material from that of the sheet part 61, and that the connecting element 63 is also made of a different material. The connecting element 63 has a hook part 63a for gripping behind a thickened bottom edge 68a of a mudguard 68. The dress guard 60 also comprises a hinge element 65 which is permanently and integrally formed with the sheet parts 71 and 61. Owing to the fact that the hinge element 65 is made of a flexible material, the two dress guard parts can swing relative to each other, in such a way that the dress guard can be fitted in the optimum manner around a lock of a bicycle or the like. A connecting element 72 can be fitted in the hinge element 65 here, which connecting element can be brought into engagement with a rear fork of a bicycle or the like. This connecting element 72 can also be formed integrally with the hinge element 65. It is also possible for the hinge element 65 to be formed integrally with only one of the sheet parts, after which the other sheet part is connected to the hinge.

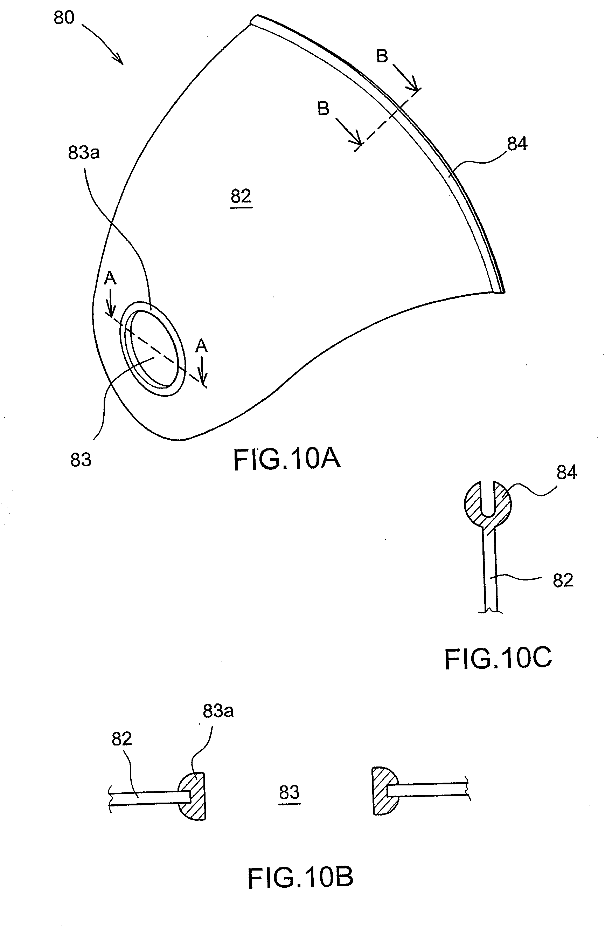

Fig. 10 shows a seventh embodiment of a dress guard part 80 according to the invention. The dress guard part 80 together with a similar dress guard part can form a dress guard such as that shown in Fig. 9. The dress guard part 80 comprises a sheet part 82 and two connecting elements 83 and 84. The connecting element 83 is an opening in the sheet part 82, surrounded by an edge 83a made of a material with different properties from those of the sheet part. Said edge 83a can provide additional rigidity, but can also be slightly flexible, so that a loose connecting element to be accommodated in it is securely wedged and does not cause any damage to the sheet part 82. A loose connecting element through this opening 83 can connect the dress guard part 80 shown to a second dress guard part (not shown), in order to form a dress guard such as that shown in Fig. 9. This loose connecting element can also connect the two dress guard parts to a rear fork of a bicycle. In an embodiment which is not shown a dress guard part comprises a projection on the sheet part, which projection can be accommodated in an opening like the opening 83 shown in fig. 10. The connecting element 84 is a slot-shaped opening situated on a part of the periphery of the sheet part 82, with which an edge of a mudguard can be brought into engagement. In the embodiment shown the connecting element 84 is of a length which is equal to the length of the entire top part of the periphery of the sheet part 82.

## Claims

1. Dress guard for fastening to a mudguard of a bicycle or the like, comprising at least one dress guard part, at least one of the dress guard parts containing:
• at least one plastic sheet part for shielding a part of a wheel of the bicycle or the like, which sheet part is manufactured by means of injection moulding, and
• at least one other part made of a material with different properties from those of the sheet part, which other part is permanently connected to the sheet part,
**characterized in that**
the at least one sheet part and the at least one other part are manufactured in a single multi-component injection mould, in such a way that the permanent connection is obtained.

2. Dress guard according to claim 1, in which the other part is made of a material with different mechanical and/or physical properties, and in which the sheet part is preferably made of a rigid, possibly transparent material.

3. Dress guard according to one or more of the preceding claims, **characterized in that** the other part comprises one or more contact parts which ultimately rest against parts of the bicycle or the like, the contact parts preferably being made of a flexible material, and the contact part preferably being a contact edge along at least a part of the periphery of the sheet part, in such a way that after fastening said contact edge rests in a sealing manner against the mudguard.

4. Dress guard according to one or more of the preceding claims, **characterized in that** the other part comprises one or more reinforcing elements, which reinforcing element is preferably made of a rigid material, and which reinforcing element is preferably a peripheral edge along at least a part of the periphery of the sheet part, and which reinforcing element is preferably formed by one or more ribs in the sheet part.

5. Dress guard according to one or more of the preceding claims, **characterized in that** the other part comprises one or more connecting elements, the part of the connecting element which ultimately rests against the bicycle or the like preferably being made of a flexible material, and a side of the connecting element which does not touch the bicycle or the like preferably being made of a rigid plastic.

6. Dress guard according to one or more of the preceding claims, **characterized in that** the connecting element is a clamp for bringing into engagement with a rear fork of a bicycle or the like, which connecting element is preferably a substantially U-shaped clamp in which the legs of the U extend substantially perpendicularly to the sheet part for the purpose of fastening the dress guard part to a rear fork of a bicycle or the like.

7. Dress guard according to one or more of the preceding claims, **characterized in that** the connecting element is a spring lip situated on at least a part of the periphery of the sheet part, which spring lip can spring laterally relative to the sheet part, and which spring lip preferably has a hook part so that the spring lip can grip behind an edge of a mudguard.

8. Dress guard according to one or more of the preceding claims, **characterized in that** the connecting element is a slot-shaped opening which is situated on at least a part of the periphery of the sheet part and with which an edge of a mudguard can be brought into engagement.

9. Dress guard according to one or more of the preceding claims, **characterized in that** the connecting element is an element which is a component of a connecting assembly, for connecting two dress guard parts to each other by way of the connecting assembly extending above the mudguard, which element is preferably a strip which is connectable to a second part of the connecting assembly on a second dress guard part on the other side of the mudguard.

10. Dress guard according to one or more of the preceding claims, **characterized in that** the connecting element is of a length which is equal or virtually equal to the length of the entire top part of the periphery of the sheet part.

11. Dress guard according to one or more of the preceding claims, **characterized in that** the connecting element is a hinge element which is provided on the sheet part and with which a second dress guard part can be brought into engagement, which hinge element preferably also comprises a connecting element which can be brought into engagement with a rear fork of a bicycle or the like.

12. Dress guard according to one or more of the preceding claims, **characterized in that** the connecting element is an opening in the sheet part, surrounded by an edge made of a material with different properties.

13. Dress guard according to one or more of the preceding claims, **characterized in that** the connecting element is a projection on the sheet part, which projection on the sheet part preferably comprises two spring lips with a hook, so that said spring lips can engage in an opening.

14. Dress guard according to one or more of the preceding claims, **characterized in that** the sheet part is of a convex shape.

15. Dress guard according to one or more of the preceding claims, manufactured by a two-component injection moulding method.

16. Method for manufacturing a dress guard part for a dress guard, which dress guard part contains:
at least one plastic sheet part for shielding a part of a wheel of the bicycle or the like, which sheet part is manufactured by injection moulding, and
at least one other part made of a material with different properties from those of the sheet part, which other part is permanently connected to the sheet part,
**characterized in that**
the at least one sheet part and the at least one other part from a material with different properties are injection moulded in succession in a single multi-component injection mould.

17. Bicycle with a mudguard provided with a dress guard according to one or more of the preceding claims.
